# EUROPEAN PATENT APPLICATION

(11) **EP 2 618 047 A1**
(43) Date of publication of application: **24.07.2013**
(21) Application number: 13000157.1
(22) Date of filing: 13.01.2013
(51) Int. Cl.: F21V 8/00, F21V 13/00

(54) **Double-sided planar light apparatus**

(30) Priority: 20.01.2012 TW 101201535 U
(71) Applicant: MENGEWEIN, Shao-Chen, 59846 Sundern (DE)
(72) Inventor: Wang, Yu Hsuan, Chupei City Hsinchu Hsien 30252 (TW); Shih-Chang, Li, Chupei City Hsinchu Hsien 30252 (TW)
(74) Representative: Schneider, Uwe

(57) **Abstract**

A double-sided planar light apparatus is disclosed. A light guide plate has a first optical surface and a second optical surface opposite to each other, and a plurality of optical bumps are disposed on the second optical surface. A first optical plate, which has a plurality of prism structures thereon, is disposed on the first optical surface. An extruded aluminum frame encloses a part of the optical plates and a light source emitting light, which enters sides of the light guide plate. The optical bumps convert and concentrate the uniformly distributed light to emit throughout the optical surfaces for double-sided lighting. A transflective sheet is added while the lighting ratio adjustment of the light apparatus is required. Upon multi-layer coated films of the sheet, the ratio of the transmitted and reflected light varies. Thereby, a user can freely change the sheet for adjusting the light distribution on the light apparatus.

## Description

### FIELD OF THE INVENTION

The present invention relates generally to a double-sided planar light apparatus, and particularly to a double-sided planar light apparatus enabling users to adjust freely the light intensity on both sides for adapting to various scenarios.

### BACKGROUND OF THE INVENTION

With the progress of technologies, the light emitting diode (LED) technology, the associated peripheral integrated-circuit control devices, and the heat dissipation technology are getting mature, and hence making its applications diversified. Its applications include low-power power indicators, backlights for keypads of mobile phones, LED backlight modules, and general light products. Thereby, the LED technology has been replacing the light sources according to the prior art gradually. As LED light bulbs are developing actively, straight-tube LED lamps have also been developed and manufactured for the purpose of replacing the original straight fluorescent tubes. In comparison with fluorescent lamps, LED lamps can reduce approximately 44% of power consumption, and thus achieving the purpose of saving substantial power. Straight-tube LED lamps suppress power consumption and avoid waste of power by adopting high-efficiency components and luminance compensating circuits for adjusting brightness automatically. While maintaining almost identical, namely, 94%, brightness of original fluorescent lamps, the power consumption of straight-tube LED lamps is reduced nearly by half. The lifetime of straight-tube LED lamps is approximately three times that of original fluorescent lamps, reaching 40 thousand hours. In addition, the maintenance and management costs can be further saved.

Because LEDs are point light sources, the design is more flexible: we can have glareless light bulbs using distributed light sources, or we can make light bulbs with light focus on one point or certain regions. The generated color is more brightly colored. The light emitting efficiency of white-light LEDs has currently reached over 130 lm/W, surpassing 15 lm/W of fluorescent light bulbs. Nonetheless, only 35% of the input power to LEDs is converted to light; the rest 65% of power is converted to heat. The generated heat is just the very cause of low light emitting efficiency in LEDs. Besides, if the heat dissipating mechanism of the overall apparatus is not well designed, the generated heat by LEDs will accumulate and thus shortening the lifetime of the LEDs. In general, the lifetime of LED lamps is over 100,000 hours. However, if the operating temperature is above 85°C, the lifetime will be significantly reduced.

For applying LEDs to a backlight module as the light sources, a light guide plate is further required as the medium of guiding light. By means of the light guide plate, the brightness of the panel can be enhanced and the uniformity of luminance can be controlled. A light guide plate utilizes the principle of total reflection for transmitting the light from light sources to the remote end of the light guide plate. Then the reflected light will diffuse to various angles by using the diffusion point pattern printed at the bottom of the light guide plate. The total reflection of light will be destroyed by designing the diffusion point pattern with different densities and sizes. Thereby, the light will be guided to the front surface of the light guide plate. If the refraction index is greater, the light guiding capability is better. The light is fed to the light guide plate from the rear end of the light tube. Some light may go through the front surface of the light guide plate. The rest light that cannot diffuse will be guided back to the light guide plate via the reflection plate at the bottom. Accordingly, by means of the light guide plate, the light emitted by the light emitting sources is guided to both sides, and hence enabling a double-sided planar light apparatus with the effect of double-sided lighting.

In order to let a user be able to adjust the distribution of light intensity on both sides, an additional transflective sheet can be installed. Also known as a beam splitter, a transflective sheet is an optical device capable of splitting laser, images, or light sources; a part of the laser, images, or light sources is transmitted while the other part thereof is reflected. The ratio of transmittance to reflectance, for example, 30% transmittance to 70% reflectance, depends on the material of the surface reflection film. The beam splitting principle of a transflective sheet is to reflect some proportion of the energy of the incident light beam using the optical coating on the lens and let the remaining unabsorbed portion penetrate. A transflective sheet is usually applied to laser applications, automatic optical inspection, image equipment, and optical equipment.

In the structure of a double-sided light apparatus according to the prior art, light can be emitted freely only; there is no structure for concentrating and diffusing light and for distributing freely the ratio of light emitted to both sides. Thereby, the present invention provides a double-sided planar light apparatus mainly applied to double-sided lighting. The double-sided planar light apparatus according to the present invention has a plurality of optical plates on both sides of a light guide plate and at least a light source on the other two sides thereof. The plurality of optical plates have the function of diffusing and concentrating light. Hence, when using the double-sided planar light apparatus, the light effect is enhanced. Besides, for adjusting the ratio of light distributed on both sides freely, a transflective sheet is added to one side. Depending on the specifications of the transflective sheet, the ratio of the transmitted light to the reflected light is different. A user can change to different transflective sheets according to the required distribution of light on both sides for various scenarios.

### SUMMARY

An objective of the present invention is to provide a double-sided planar lights apparatus, which is a double-sided planar light source. Different from the general double-sided light sources, the double-sided planar light apparatus according to the present invention has structure for concentrating the emitted light and enhancing luminance. Thereby, while using the identical light sources, the double-sided planar light apparatus according to the present invention has improved lighting quality.

Another objective of the present invention is to provide a double-sided planar light apparatus. By means of the installed optical plate having particles with high refraction and reflection indexes, the light emitted from the light source can have the diffusive effect while passing through the optical plate. Thereby, while using the double-sided planar light apparatus, the emitted light can diffuse more to the surroundings and thus increasing the lighting range.

Still another objective of the present invention is to provide a double-sided planar light apparatus. By using the transflective sheet, the ratio of the emitted light on both sides can be distributed freely. Because the transflective sheets can have different specifications, the ratio of the transmitted light to the reflective light varies. A user can change the transflective sheet according to the application scenario for adjusting the light emitting effect on both sides.

A further objective of the present invention is to provide a double-sided planar light apparatus. According to the structure of the present invention, LED light sources are disposed on both ends only. Instead of installing LEDs inside densely, a light guide plate is used for guiding and emitting light to both sides. While using light apparatus, the failed part is mostly the light source. Thereby, according to the present invention, the usage and repair costs for the light apparatus can be saved. Besides, the light emitting efficiency is decent.

For achieving the objectives described above, the present invention provides a double-sided planar light apparatus, which comprises at least a light source, a light guide plate, an optical plate, and an extruded aluminum frame. The light source includes at least an LED and a printed circuit board. The LED is disposed on the printed circuit board. The light guide plate is disposed on the light emitting surface of the light source and includes a first optical surface and a second optical surface. In addition, the second optical surface has a plurality of optical bumps. The optical plate is disposed on the first optical surface of the light guide plate and has a plurality of prism structures in rhombus or pyramid on its surface. The overall structure is then fixed by the extruded aluminum frame. When the light apparatus is turned on, the light sources emit light from the both ends. The light is transferred to the remote end using the light guide plate. Then, by means of the plurality of optical bumps, the light is converted and concentrated to direct light and emitted from the first and second optical surfaces, and hence making the double-sides planar light apparatus according to the present invention be a light apparatus capable emitting light on both sides.

The optical plate contains particles with high refraction and reflection indexes, which makes the light emitted in a diffusive fashion. The prism structure on the optical plate has the function of concentrating light. Thereby, the structure and material of the optical plate improve the lighting range and luminance of the present light apparatus. Besides, the number of the optical plate is not limited to one. A second optical plate can be further disposed on the second optical surface of the light guide plate. Moreover, the plurality of optical plates can be brightness enhancement films or light diffusing films. There is no limitation on their types.

Furthermore, in some cases in which the required light intensity on both sides are different, such as using the light apparatus according to the present invention in signboards, an extra transflective sheet can be added between the light guide plate and the second optical plate. Alternatively, the second optical plate can be substituted by a transflective sheet. Depending on the specifications of the transflective sheet, the ratio of the transmitted light to the reflected light is different. A user can change to different transflective sheets according to the required distribution of light on both sides for various scenarios.

### BRIEF DESCRIPTION OF THE DRAWINGS

Figure 1 shows a cross-sectional view of the double-sided planar light apparatus according to the first embodiment of the present invention;
Figure 2 shows a cross-sectional view of the double-sided planar light apparatus according to the second embodiment of the present invention;
Figure 3A shows a detailed structure diagram of the optical plate of the double-sided planar light apparatus according to the present invention when the optical plate is a brightness enhancement film;
Figure 3B shows a detailed structure diagram of the optical plate of the double-sided planar light apparatus according to the present invention when the optical plate is a light diffusing film; and
Figure 4 shows a detailed structure diagram of the contact surface of the light guide plate and the optical plate of the double-sided planar light apparatus according to the present invention.

### DETAILED DESCRIPTION

In order to make the structure and characteristics as well as the effectiveness of the present invention to be further understood and recognized, the detailed description of the present invention is provided as follows along with embodiments and accompanying figures.

The present invention provides a double-sided planar light apparatus. In a general double-sided light apparatus, light sources are installed densely inside the light apparatus and thereby leading to huge power consumption and costs. The double-sided planar light apparatus according to the present invention has light sources on both ends only. By using the light guide plate, the optical plate, and their detailed structures, the emitted light can have improved luminance and the lighting range is extended. The light emitting efficiency is enhanced by its structure and thus saving the application costs.

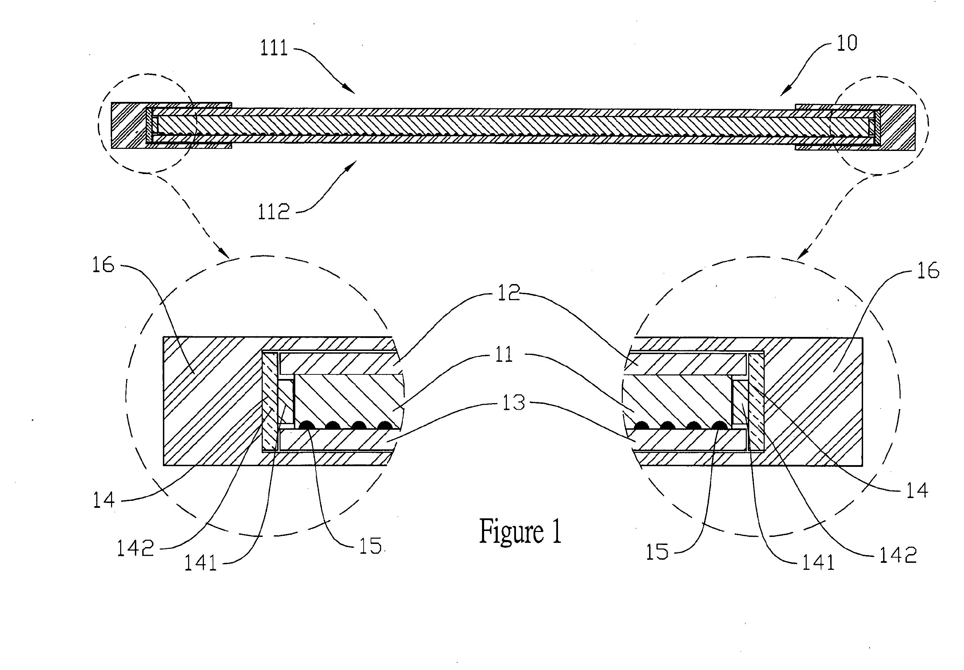

Figure 1 shows a cross-sectional view of the double-sided planar light apparatus according to the first embodiment of the present invention. As shown in the figure, the double-sided planar light apparatus 10 according to the present invention comprises a light guide plate 11, a first optical plate 12, a second optical plate 13, at least a light source 14, and an extruded aluminum frame 16. The light source 14 includes at least an LED 141 and a printed circuit board 142. The LED 141 is disposed on the printed circuit board 142. The light guide plate 11 has a first optical surface 111 and a second optical surface 112 opposing to each other. In addition, the light guide plate 11 has a plurality of optical bumps 15 on the second optical surface 112. The first and second optical plates 12, 13 are disposed on two opposing sides of the light guide plate 11 and correspond to the first and second optical surfaces 111, 112. The optical plates 12, 13 have a plurality of prism structures 18 on their surfaces. The light source 14 is disposed on the other two sides of the light guide plate 11 not facing the optical surfaces. The extruded aluminum frame 16 is disposed on the outermost edge and enveloping the light source 14 and a part of the first and second optical plates 12, 13. Because the light source 14 is located on both ends of the light guide plate 11, light is emitted from the ends into the light guide plate 11, which then transmits the light to the remote end and distributes the light in the light guide plate 11 uniformly. The optical bumps 15 convert the light and concentrate it to the first and second optical surfaces 111, 112 before emitting it. The above describes the double-sided light emitting principle of the double-sided planar light apparatus 10 according to the present invention.

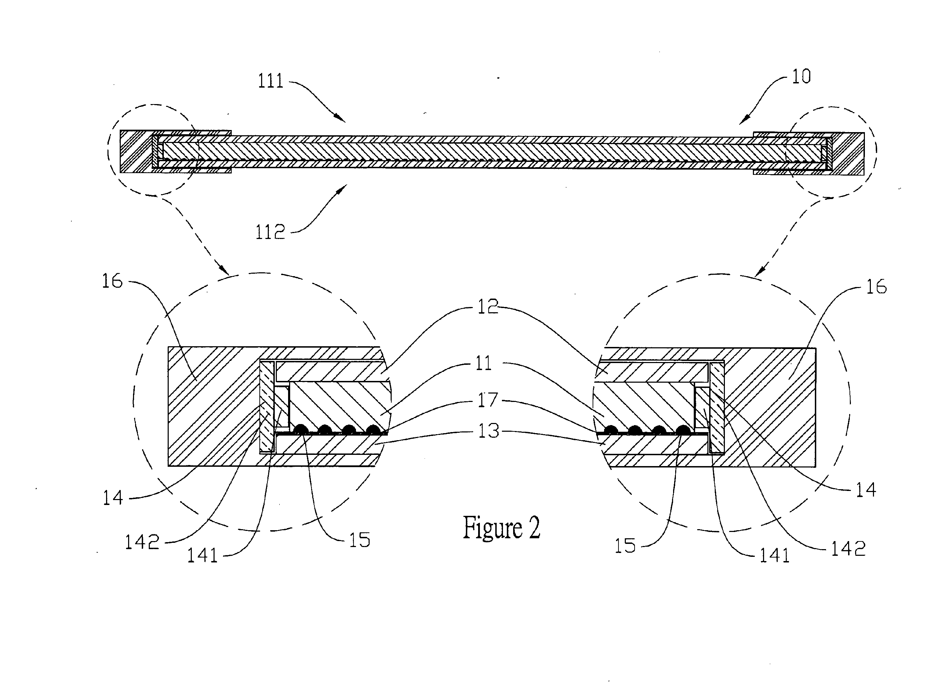

Figure 2 shows a cross-sectional view of the double-sided planar light apparatus according to the second embodiment of the present invention. The difference between the second embodiment and the first one is that a transflective sheet 17 is disposed between the light guide plate 11 and the second optical plate. Alternatively, the second optical plate 13 is replaced directly by a transflective sheet 17. According to the coated multi-layer film structure coated, the transflective sheet 17 has different ratio of transmitted to reflected light. The main characteristic of the double-sided planar light apparatus 10 according to the present invention is double-sided lighting. In some applications, the light intensity on both sides is not required to be the same. For example, in a signboard, one side of the signboard may face to the road with many people, while the other side thereof may have less people viewing it. Then, by changing the transflective sheet 17, the ratio of double-sided light emitting can be set to 7:3 or 8:2. The user can change the transflective sheet 17 according to the application scenario for adjusting the light distribution. The transflective sheet 17 is adopted according to the prior art. Nonetheless, the embodiments described in the present invention are just examples, not used for limiting the present invention.

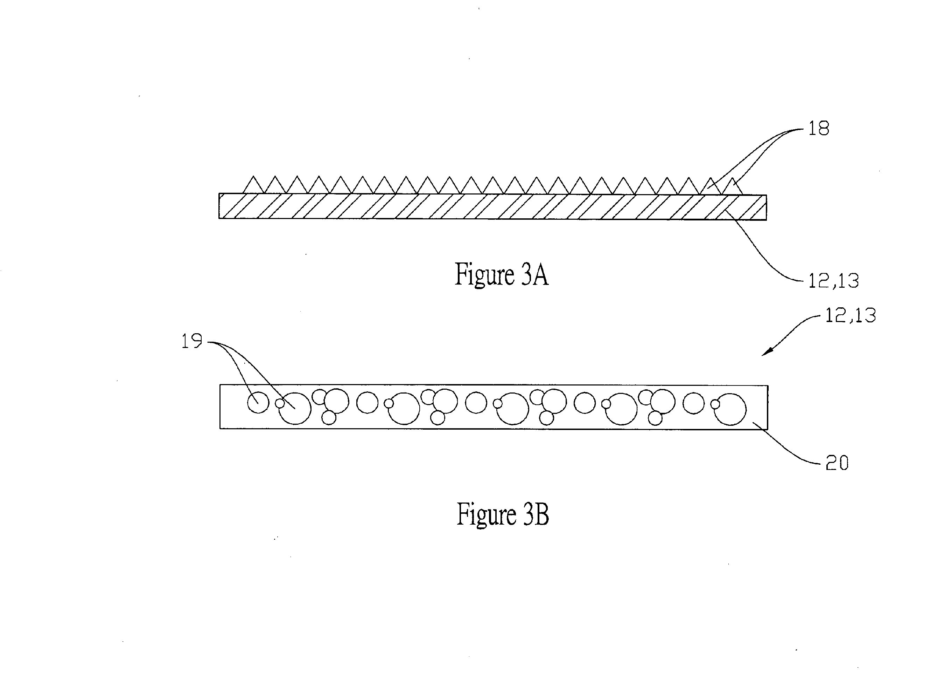

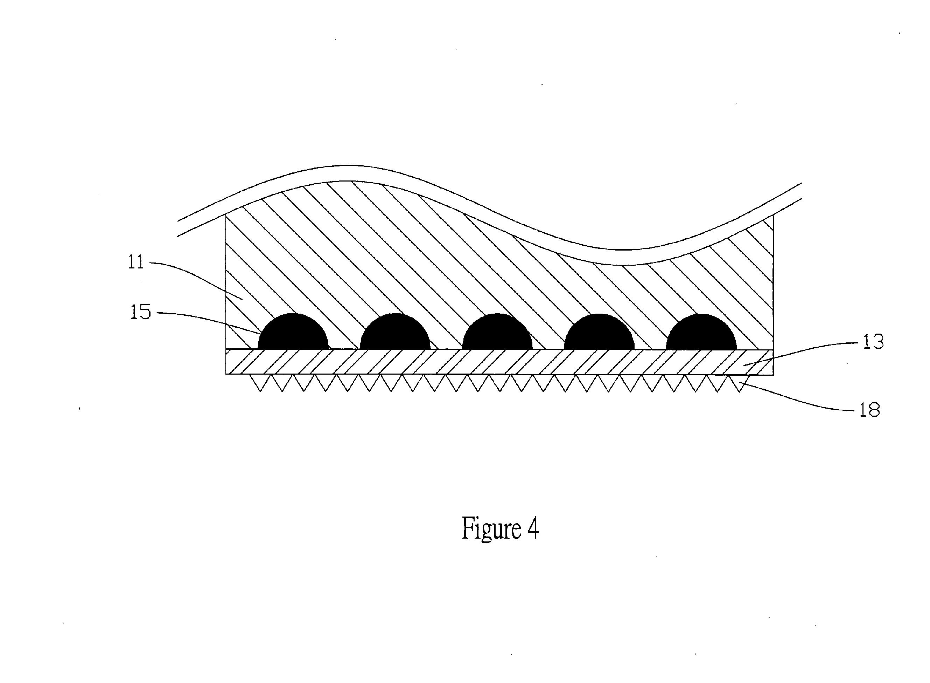

The optical plates can be brightness enhancement films, light diffusing films, or their combinations. There is no limitation on their types. The light diffusing films are manufactured by adding particles with high refraction index or opaque particles with high reflection index, so that light can emit in a diffusive fashion and thus increasing lighting uniformity. In addition, the plurality of prism structures disposed on the surfaces of the optical plates have the function of concentrating light. Thereby, the structure and material of the optical plates enhance the uniformity and luminance of the present light apparatus. Figure 3A shows a detailed structure diagram of the optical plate of the double-sided planar light apparatus according to the present invention when the optical plate is a brightness enhancement film; Figure 3B shows a detailed structure diagram of the optical plate of the double-sided planar light apparatus according to the present invention when the optical plate is a light diffusing film; and Figure 4 shows a detailed structure diagram of the contact surface of the light guide plate and the optical plate of the double-sided planar light apparatus according to the present invention. As shown in Figure 3A, a plurality of prism structures 18 in rhombus or pyramid are disposed on the surfaces of the optical plates 12, 13. They have the function of concentrating light and are able to further concentrate the light emitted from the light guide plate 11 for improving luminance. As shown in Figure 3B, the optical plates 12, 13 adopts a transparent material 20, such as PC or PMMA, and have a plurality of light diffusing particles 19 for enhancing uniformity. As shown in Figure 4, on the second optical surface 112, when the light guide plate 11 and the second optical plate 13 are connected tightly to each other, the light concentrating effect will be the best. Nonetheless, it is not required that they have to be connected tightly to each other. Limitations of structures may make tight connection not possible.

To sum up, the present invention provides a double-sided planar light apparatus, which comprises a light guide plate, a first optical plate, at least a light source, and an extruded aluminum frame. The light source includes at least an LED and a printed circuit board. The LED is disposed on the printed circuit board. The light guide plate has a first optical surface and a second optical surface opposing to each other. In addition, the light guide plate has a plurality of optical bumps on the second optical surface. The first optical plate is disposed on the first optical surface of the light guide plate. The optical plate has a plurality of prism structures in rhombus or pyramid on its surface. The extruded aluminum frame envelops the light source and a part of the first optical plates. When the light source emits light, the light enters the light guide plate from sides. After the light is distributed uniformly, the plurality of optical bumps convert and concentrate the light before the light emits to the optical surfaces and thus achieving double-sided lighting. If required, a second optical plate can be added on the second optical surface. The first and second optical plates can be brightness enhancement film or light diffusing film. The material of the optical plate and the plurality of prism structures improve the lighting range and luminance of the present light apparatus. If the ratio of lighting on both sides needs to be adjusted, a transflective sheet can be added between the light guide plate and the second optical plate. Alternatively, the second optical plate can be replaced directly by a transflective sheet. Depending on the coated multi-layer film structure on the transflective sheet, the ratio of the transmitted to the reflected light differs. Thereby, a user can change the transflective sheet freely for adjusting the light distribution on both sides of the light apparatus according to the present invention.

Accordingly, the present invention conforms to the legal requirements owing to its novelty, nonobviousness, and utility. However, the foregoing description is only embodiments of the present invention, not used to limit the scope and range of the present invention. Those equivalent changes or modifications made according to the shape, structure, feature, or spirit described in the claims of the present invention are included in the appended claims of the present invention.

## Claims

1. A double-sided planar light apparatus, comprising:
at least a light source;
a light guide plate, disposed on a light emitting surface of said light source, and having a first optical surface and a second optical surface on its top and bottom surfaces, respectively; and
a fist optical plate, disposed on said first optical surface;
wherein said light source emits light through said first optical plate to both sides for double-sided lighting.

2. The planar light apparatus as claimed in claim 1, wherein said light source includes at least a light emitting diode and a printed circuit board, and said light emitting diode is disposed on said printed circuit board.

3. The planar light apparatus as claimed in claim 1, wherein said light guide plate further includes a plurality of optical bumps disposed on said second optical surface.

4. The planar light apparatus as claimed in claim 1, further comprising a second optical plate disposed on said second optical surface.

5. The planar light apparatus as claimed in claim 1, wherein said first optical plate is a brightness enhancement film.

6. The planar light apparatus as claimed in claim 1, wherein said first optical plate has a plurality of prism structures.

7. The planar light apparatus as claimed in claim 6, wherein said plurality of prism structures are pyramid-shaped.

8. The planar light apparatus as claimed in claim 6, wherein said plurality of prism structures are rhombus-shaped.

9. The planar light apparatus as claimed in claim 1, wherein said first optical plate is a light diffusing film.

10. The planar light apparatus as claimed in claim 4, wherein said second optical plate is a brightness enhancement film.

11. The planar light apparatus as claimed in claim 4, wherein said second optical plate has a plurality of prism structures.

12. The planar light apparatus as claimed in claim 11, wherein said plurality of prism structures are pyramid-shaped.

13. The planar light apparatus as claimed in claim 11, wherein said plurality of prism structures are rhombus-shaped.

14. The planar light apparatus as claimed in claim 4, wherein said second optical plate is a light diffusing film.

15. The planar light apparatus as claimed in claim 4, further comprising an extruded aluminum frame enveloping said light source and the edges of said optical plates.

16. The planar light apparatus as claimed in claim 4, wherein a transflective sheet is further disposed between said second optical plate and said light guide plate.

17. The planar light apparatus as claimed in claim 4, wherein said second optical plate is a transflective sheet.
